Europäisches Patentamt

European Patent Office

Office européen des brevets

(19)

(11) Publication number: **0 162 163**
**B1**

(12)

# EUROPEAN PATENT SPECIFICATION

(45) Date of publication of patent specification: **02.03.88**

(51) Int. Cl.⁴: **G 21 C 7/36**

(21) Application number: **84303541.1**

(22) Date of filing: **25.05.84**

(54) Control system for nuclear reactor control rods.

(43) Date of publication of application:
**27.11.85 Bulletin 85/48**

(45) Publication of the grant of the patent:
**02.03.88 Bulletin 88/09**

(84) Designated Contracting States:
**DE FR GB**

(56) References cited:
**DE-A-2 005 752**
**US-A-3 619 635**
**US-A-3 796 890**
**US-A-3 991 359**

(73) Proprietor: **MITSUBISHI DENKI KABUSHIKI
KAISHA
2-3, Marunouchi 2-chome Chiyoda-ku
Tokyo 100 (JP)**

(72) Inventor: **Nishizawa, Yukio
625-7, Nakamura Inami-cho
Kako County Hyogo Prefecture (JP)**
Inventor: **Yasue, Satoru Room No. 203
Takamaru Dai-ichi Apartment 7-6-8, Takamura
Tarumi-ku Kobe Hyogo Prefecture (JP)**

(74) Representative: **Lawson, David Glynne et al
MARKS & CLERK 57-60 Lincoln's Inn Fields
London WC2A 3LS (GB)**

Courier Press, Leamington Spa, England.

## Description

This invention relates to a control system for nuclear reactor control rods, and in particular to a control system utilized for inserting into or withdrawing from a nuclear reactor a control rod used for controlling the thermal power of the nuclear reactor and the shutdown of the nuclear reactor.

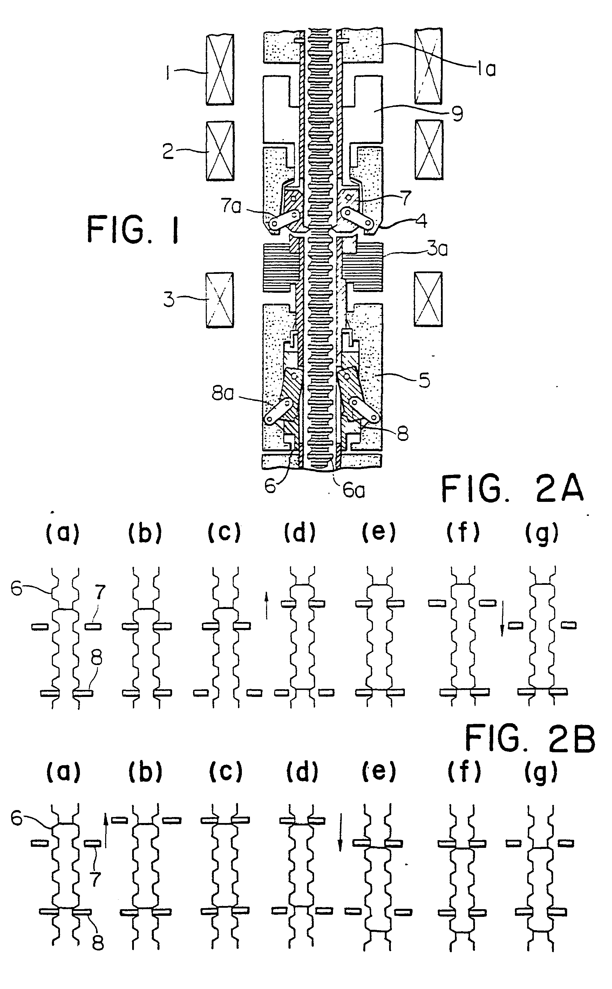

The structure of a single magnetically jacked driving mechanism for control of a single control rod in a nuclear reactor is schematically shown in Fig. 1 including a lift coil 1, a movable gripper coil 2 (hereinafter referred to as MG coil), and a stationary gripper coil 3 (hereinafter referred to as SG coil) all of which are disposed outside a nuclear reactor pressure vessel and serve to actuate an excited armature disposed within the pressure vessel. Namely, the MG coil 2 and the SG coil 3 respectively excite an MG armature 4 and an SG armature 5 which, upon the excitation, respectively actuate latches 7 and 8, which are engaged with a valley or groove 6a formed in a control rod driving shaft 6. The movable latch 7 is raised or lowered by a lift armature 9 when the lift coil 1 is excited, and is used for raising i.e. withdrawing the shaft 6 or for lowering i.e. inserting the shaft 6. The stationary latch 8 is used for retaining the shaft 6 at a fixed position. It is to be noted that this mechanism in Fig. 1 further has minor elements, namely, of a lift magnetic pole 1a, an SG magnetic pole 3a, a movable latch link 7a, and a stationary latch link 8a.

The driving sequence of the control rod driving mechanism as above noted is shown in Fig. 2. In the figure, the corresponding portions in Fig. 1 are designated by the same reference numerals, whereas the movable latch 7 and the stationary latch 8 are briefly represented for illustration purposes.

The withdrawal and insertion sequences of the control rod will now be described with reference to Figs. 1 and 2.

Withdrawal sequence: Fig. 2A

Step (a); Initially in the standby state, the SG coil 3 is excited which causes the stationary latch 8 to lock onto the driving shaft 6, whereby the driving shaft 6 or the control rod is retained at a fixed position.

Step (b); The MG coil 2 is excited which causes the movable latch 7 to lock onto the driving shaft 6.

Step (c); The SG coil 3 is de-excited which allows the stationary latch 8 to release the driving shaft 6.

Step (d); The lift coil 1 is excited which causes the lift armature 9 to move upwards which in turn raises the MG armature 4 and, accordingly, raises the movable latch 7, thereby raising the driving shaft 6, supported by the movable latch 7, a distance of one groove in the grooves 6a of the driving shaft 6 along an arrow shown in the figure.

Step (e); The SG coil 3 is excited which causes the stationary latch 8 to lock onto the driving shaft 6.

Step (f); The MG coil 2 is de-excited which allows the movable latch 7 to release the driving shaft 6.

Step (g); The lift coil 1 is de-excited which allows the lift armature 9 to move down along an arrow shown in the figure.

The repetition of the above sequence will complete the withdrawal operation.

Insertion sequence: Fig. 2B

Step (a); Initially in the standby state, where the SG coil 3 is excited which causes the stationary latch 8 to lock onto the driving shaft 6, whereby the driving shaft 6 is retained at a fixed position.

Step (b); The lift coil 1 is excited to raise the lift armature 9 and, accordingly, the MG armature 4 and the movable latch 7 along an arrow shown in the figure.

Step (c); The MG coil 2 is excited which causes the movable latch 7 to lock onto the driving shaft.

Step (d); The SG coil 3 is de-excited which allows the stationary latch 8 to release the driving shaft 6.

Step (e); The lift coil 1 is de-excited which allows the lift armature 9 to move down, thereby lowering the driving shaft 6 by one groove in the grooves 6a along an arrow shown in the figure.

Step (f); The SG coil 3 is excited which causes the stationary latch 8 to lock onto the driving shaft 6.

Step (g); The MG coil 2 is de-excited which allows the movable latch 7 to release the driving shaft 6.

The repetition of the above sequence will complete the inserting operation.

As above noted, the withdrawal and insertion operations of the driving shaft 6 of the control rod from and into the nuclear reactor are performed by the sequential application of a DC current to three kinds of coils, namely the SG coil, MG coil, and lift coil in the control rod driving mechanism while when the control rod is not driven i.e. held at a fixed position, the SG coil continues to be excited to hold the driving shaft, that is the control rod at that fixed position. It is important to note that when the control rod is not driven as shown in Figs. 2A(a) and 2B(a), the control rod will fall down into the nuclear reactor if the stationary latch 8 releases the driving shaft 6 due to the excitation of the SG coil 3 being interrupted, thereby causing the reactor to be shutdown.

Namely, in a conventional control system for a nuclear reactor, the supply of a DC current for the above three coils in the control rod driving mechanism is controlled, and if the excitation of the SG coil is interrupted in the standby condition of the control rod, the stationary latch 8 will release the driving shaft 6, thereby no longer retaining the driving shaft. In this regard, for example, the US—A—3,619,635 issued to F. T. Thompson retains the control rod only by means of the SG coil. Therefore, the control rod will fall down into the reactor core, disadvantageously resulting in a reactor shutdown, as the case may be.

It is accordingly an object of the invention to provide an improved control system for a nuclear reactor control rod which is driven by a control rod driving mechanism which includes lift coils, MG coils, and SG coils. In a standby condition of the driving mechanism, the control system of the present invention operates such that the control rod is simultaneously retained by a stationary latch and a movable latch respectively actuated by a SG coil and a MG coil in the driving mechanism. Therefore, even though either of the SG coil or the MG coil has lost its excitation function to release the stationary latch or the movable latch respectively, the remaining excited coil will cause the respective latch to continue to retain the control rod at the same position, thereby increasing the safety of operation of the nuclear reactor.

Specifically, this control system comprises a first power unit, a transfer switch circuit, second power units, third poower units, and a reference current source. The first power unit provides a DC output. The transfer switch circuit selectively supplies the DC output of the first power unit to each group of the lift coils in a predetermined sequence. The number of second power units is the same as the number of the groups and the second power units provide a DC output to the movable gripper coils of each of the groups. The number of third power units is also the same as the number of the groups and the third power units provide a DC output to the stationary gripper coils of each of the groups. The reference current source provides a first reference current signal to the first power unit and provides in parallel second and third reference current signals which correspond with each other to the second and third power units, respectively, in the predetermined sequence so that one group of the control rods performs the withdrawal or the insertion operation while the remaining groups of the control rods stand by. The second and third power units respectively simultaneously excite the remaining groups in response to the second and third reference current signals of the reference current source so that the movable gripper coils and the stationary gripper coils simultaneously retain the corresponding control rods in the standby state.

BRIEF DESCRIPTION OF THE
DRAWINGS

Figure 1 shows a schematical cross-sectional view of a control rod driving mechanism generally used for a nuclear reactor either in the prior art or the present invention;

Figures 2A and 2B show the withdrawal and insertion operation sequences of the control rod driving mechanism in Figure 1, respectively;

Figure 3 shows a circuit diagram of a prior art control system for a nuclear reactor control rod; and,

Figure 4 shows a circuit diagram of a control system for a nuclear reactor control rod according to a preferred embodiment of the present invention.

It is to be noted that throughout the figures the same reference numerals designate identical or corresponding portions.

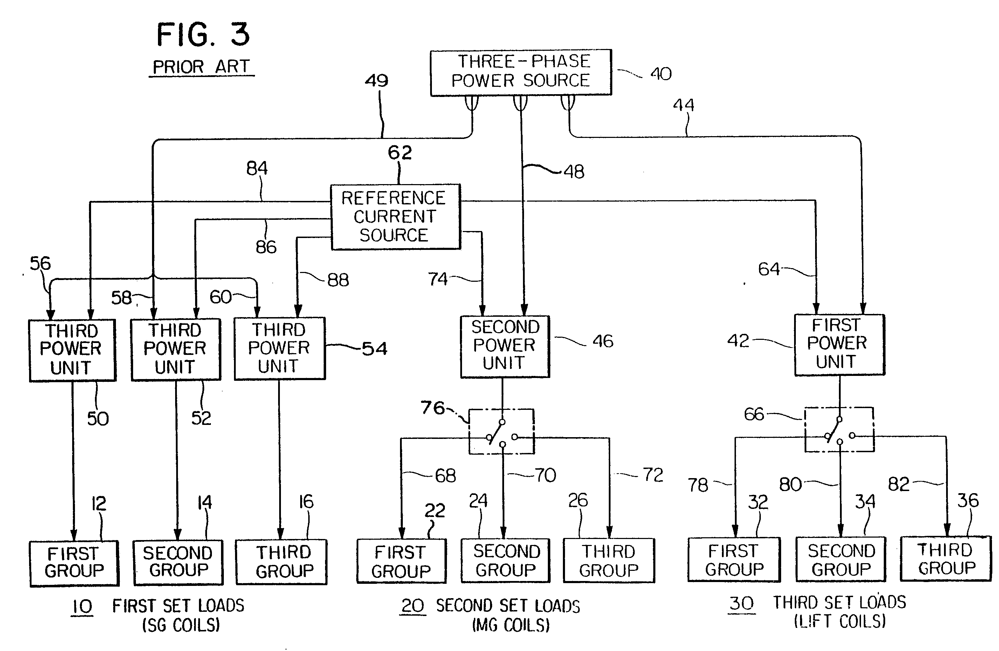

At first, a prior art control system for a nuclear reactor control rod which supplies DC currents for three kinds of coils in a control rod driving mechanism will be described in order to more clearly point out the improvements in the present invention, with reference to Fig. 3.

In Fig. 3, a first set of loads 10 corresponds to a plurality of the SG coils 3, a second set of loads 20 corresponds to a plurality of the MG coils 2, and a third set of loads 30 corresponds to a plurality of the lift coils 1, respectively in the driving mechanism in Fig. 1. Each set of loads is shown to comprise three groups of loads as an example. Namely, the first set of loads 10 comprises first, second, and third groups of SG coils 12, 14, and 16, respectively, the second set of loads 20 comprises first, second, and third groups of MG coils 22, 24, and 26, respectively, and the third set of loads 30 comprises first, second, and third groups of lift coils 32, 34, and 36, respectively.

The SG coil groups 12, 14, and 16 require DC excitations all at the same level when the SG coils retain the control rod in the condition as shown in Figs. 2A(a) and 2B(b) and serve to sequentially drive the control rod in each group. Even during the term for which the control rod is not driven, all of the SG coils in the driving mechanism of one group are required to be excited in order to retain the control rod at a fixed position, and therefore all of the SG coil groups are not subjected to a switch-over operation as in the second and third set of loads 20 and 30 by the respective transfer switch circuits 66 and 76, which will be described later.

The first, second, and third groups of MG coils 22, 24, and 26 also require DC excitations all at the same level but different in excitation period. Namely, all of the three groups of control rods are driven at different driving times. Therefore, a first group of the control rods is driven by a first group of control rod driving mechanisms comprising the first SG coil groups, the first MG coil groups, and the first lift coil groups. A second group of the control rods are driven by a second group of control rod driving mechanisms comprising the second SG, MG, and lift coil groups. Similarly, a third group of the control rods is driven by a third group of control rod driving mechanisms comprising the third SG, MG, and lift coil groups.

It is to be noted that the driving sequence of each of the control rod groups is carried out by the excitation of said three kinds of coils in each of the control rod driving mechanisms as described with reference to Figs. 2A and 2B.

A three-phase electrical power is supplied by a three-phase source 40 to a first power unit 42, a second power unit 46, and third power units 50, 52, and 54. These power units can provide DC outputs at predetermined multiple levels, usually three levels, on the basis of a reference current signal from a well-known reference current source 62 which will be hereinafter described. Each power unit may be formed of a well-known power unit such as a thyristor converter.

The first power unit 42 receives a three-phase power from the three-phase power source 40 through a line 44 shown as a single line. The first power unit 42 sequentially provides DC currents to the lift coils of the control rod driving mechanisms.

The second power output of the three-phase power source 40 is connected to the second power unit 46 through a line 48. The second power unit 46 also sequentially provides DC currents to the MG coils of the control rod driving mechanisms.

The third power output of the three-phase power source 40 is connected to the third separate power units 50, 52, and 54 respectively through lines 56, 58, and 60 which branch out of a single output line 49. The third power units 50, 52, and 54 provide DC currents in a predetermined sequence to the SG coils of the control rod driving mechanisms.

It is to be noted that the group SG coils 12, 14, and 16 are respectively provided with separate power units 50, 52, and 54 due to the fact that when one group of the control rods is withdrawn or inserted during the operation of the control rod driving mechanism, the SG coils of the control rod driving mechanisms for the two remaining groups of the control rods are required to remain excited to retain the associated control rods at a fixed position. For example, assuming the first group of the control rod driving mechanisms be actuated, that is, the first group of the SG coils 12 of the first set of the loads 10, the first group of the MG coils 22 of the second set of the loads 20, and the first group of the lift coils 32 of the third set of the loads 30 be excited with DC currents according to a predetermined sequence, the second group of the SG coils 14 and the third group of the SG coils 16 of the first set of the loads 10 are required to be excited to retain the standby state or to prevent the control rods driven by these control rod driving mechanisms from falling inside the nuclear reactor.

The reference current source 62 is well-known as generating in a predetermined sequence a reference current signal having three levels: zero current value for keeping the coils de-excited, a lower limit current value necessary for retaining the control rods at a fixed position, and a full current value necessary only for initially driving the control rods. Since this reference current source 62 has been described in detail in the above noted US—A—3,619,635, the detailed contents of the reference current source 62 is hereby incorporated for reference into this patent application.

According to the reference current signals supplied by the reference current source 62, the corresponding power units supply DC currents to the respective loads. The reference current source 62 supplies a first reference current signal to the first power unit 42 through a line 64. The first reference current signal is used to regulate the DC output of the first power unit 42 for the lift coils of the control rod driving mechanisms. The output of the first power unit 42 is selectively switched by a first transfer switch circuit 66 in order that the DC output of the first power unit 42 may be connected to any one of the first, second, and third groups of the lift coils 32, 34, and 36 of the first set of the loads 30 through lines 78, 80, and 82, respectively. The transfer switch circuit 66 may be a thyristor switch circuit controlled in a well-known manner by an external bank selection circuit (not shown).

Likewise, a second reference current signal from the reference current source 62 is connected to the second power unit 46 for the MG coils of the control rod driving mechanisms as shown in Fig. 1 through a line 74. The DC output of the second power unit 46 is connected to a second transfer switch circuit 76 which selectively connects the output of the power unit 46 to any one of the first, second, and third groups of the MG coils 22, 24, and 26 of the second set of the loads 20 through lines 68, 70, and 72, respectively. The transfer switch circuit 76 may also be a thyristor switch circuit controlled in a well-known manner by an external bank selection circuit (not shown).

Furthermore, the reference current source 62 through lines 84, 86, and 88 respectively provides three different signals which form a third reference current signal group for the third power units 50, 52, and 54 for the SG coils. It is to be noted that the third reference current signal group have identical DC level when all of the groups are in the retaining condition. The reason why three different signals are supplied to the three different power units respectively is because, when one group of the control rods is inserted or withdrawn, it is necessary to excite the SG coils of the remaining groups of the control rods to retain these control rods at a fixed position.

In the example of Fig. 3, only the first group of the coils 12, 22, and 32 are excited to drive the first group of the control rods. Particularly, the second and third groups of the lift coils 34 and 36, and the MG coils 24 and 26 can not be excited due to the position of the switch circuits 66, and 76, respectively.

As the above prior art control system is thus constructed, if the excitation of the SG coils is interrupted during a standby state of operation of the control rods then the stationary latch actuated by the SG coils through the SG armature as described with reference to Fig. 1 will be released, failing to retain the control rods, which will allow the control rods to fall inside the reactor core and result in the shutdown of the reactor.

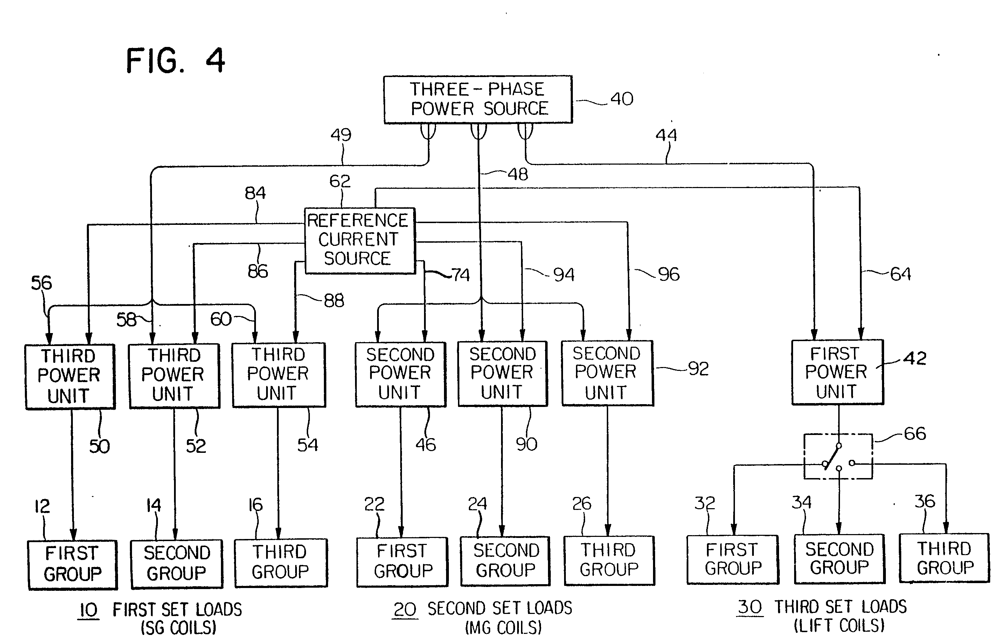

The present invention has been made to eliminate the above prior art defects as will be hereinbelow described with reference to Fig. 4.

Fig. 4 shows one preferred embodiment of a control system for nuclear reactor control rods according to the present invention. Fig. 4 is different from Fig. 3 showing the prior art control system in that additional second power units 90 and 92 are provided for supplying DC currents to the second and third groups of the MG coils 24 in the second set of the loads 20, respectively. It is to be noted that these second power units 90 and 92 are similarly connected to the three-phase power source 40 and the reference current signal source 62 as are the third power units. In other words, the difference between Figs. 3 and 4 is that the second transfer switch circuit 76 in Fig. 3 is omitted and the additional second power units 90, and 92 are provided so that the power units 46, 90, and 92 supply DC currents to the first, second, and third MG coils 22, 24, and 26 of the second set of the loads 20, respectively, without having to change over the DC current supply sequence for the coils. Therefore, the second power units 46, 90, and 92 are supplied with the different second reference signals via lines 74, 94, and 96, respectively, having a predetermined sequence in order to synchronize the respective excitations of the MG coils of the same groups in the second set of the loads 20 as are the third power units. The second reference signals 74, 94, and 96 correspond to the third reference signals 84, 86, and 88, respectively.

In a standby condition of the control rods in the prior art control system as shown in Figs. 2A(a) and 2B(a), only the first set of the loads 10 are supplied with DC currents to retain the corresponding control rods at fixed positions. However, the present invention has three second power units 46, 90, and 92 whose arrangements are the same as the third power units 50, 52, and 54, respectively, so that in the standby condition of the control rods in the present invention not only the third power units 50, 52, and 54 but also the second power units 46, 90, and 92 are supplied with DC currents. Therefore, not only the SG coils but also the MG coils can be excited to actuate the associated stationary latch as well as the associated movable latch both which engage with the control rod driving shaft as shown in Fig. 1 to retain the control rods. The reason for the provision of the different second power units 46, 90, and 92 respectively for the first, second, and third MG coils is, as previously explained with reference to the arrangement of the third power units, that when one group of the control rods is withdrawn or inserted during the operation of the control rod driving mechanism, the MG coils of the remaining group of the mechanism should be kept excited.

Therefore, even though the third power units 50, 52, and 54 malfunction to de-excite the SG coils 12, 14, and 16 to release the stationary latch 8, the second power units 46, 90, and 96 can still energize the MG coils 22, 24, and 26 to excite the corresponding movable latches thereby retaining the control rods at fixed positions without the stationary latch 8 and thereby preventing the control rods from falling inside the nuclear reactor.

On the other hand, even though the second power units 46, 90, and 96 malfunction to de-excite the MG coils 22, 24, and 26 to release the movable latch 7, the third power units 50, 52, and 54 are still energized so that the SG coils 12, 14, and 16 cause the corresponding stationary latches to retain the control rods without the movable latch 7, thereby preventing the control rods from falling inside the nuclear reactor.

It is to be noted in the example of Fig. 4 that when the first transfer switch circuit 66 connects the first power unit 42 to the first group of the lift coils 32, the first group of the SG and MG coils 12 and 22 drive the first group of the control rods downwards or upwards as shown in Fig. 2 while the second and third groups of the lift coils 34 and 36, the MG coils 24 and 26, and the SG coils 14 and 16 do not drive but retain the corresponding second and third groups of the control rods.

As set forth above, according to the present invention, it is advantageous that, since in a standby condition of the control rods both of the SG and MG coils are excited to cause the respective stationary and movable latches to retain the control rods, the possibility of an undesirable falling of the control rods into the reactor is minimized, and, accordingly, an unexpected shutdown of the nuclear reactor is also prevented.

It will be appreciated by one of ordinary skills in the art that the present invention is not limited to the above embodiment but can be modified in various forms without departing from the scope of the present invention.

**Claims**

1. A control system for nuclear reactor control rods which are arranged in a plurality of groups and driven by corresponding control rod driving mechanisms of a jack type each having a lift coil (1), a movable gripper coil (2), and a stationary gripper coil (3) to withdraw and insert the control rod, comprising:

a first power unit (42) for providing a DC output;

a transfer switch circuit (66) for selectively supplying the DC output of said first power unit (42) to one group (32, 34, 36) of the lift coils (1) in a predetermined sequence;

second power supply means (46) for supplying DC to respective ones of said movable gripper coils (2) of each of the groups (22, 24, 26);

third power units (50, 52, 54), each third power unit being connected to a respective one of said stationary gripper coils (3) of each of the groups (12, 14, 16) for providing a DC current to said stationary gripper coils; and,

a reference current source (62) for providing a first reference current signal (64) to said first power unit (42) and for providing respectively second and third reference current signals (74; 84, 86, 88) to said second power supply means (46) and third power supply means (50, 52, 54) respectively, in predetermined sequence so that one group of the control rods performs the withdrawal or the insertion operation while the remaining groups of the control rods stand by;

said second power supply means and third power units respectively exciting said remaining groups in response to said second and third reference current signals of said reference current source so that said movable gripper coils and said stationary gripper coils simultaneously retain the corresponding control rods in the standby state; characterised in that the second power supply means consists of a plurality of second power units (46, 90, 92) each connected to a respective group (22, 24, 26) of second gripper coils (2), and that the reference current source (62) supplies to each second power unit a respective second reference current signal (74, 94, 96), the second and third reference current signals corresponding to each other.

2. A control system for nuclear reactor control rods as claimed in claim 1 characterised in that all of said power units (42; 46, 90, 92; 50, 52, 54) convert a three-phase power source (40) into the DC output on the basis of said reference current signals.

3. A control system for nuclear reactor control rods as claimed in claim 1 or 2 characterised in that said nuclear reactor control rods are grouped into three so that first, second, and third groups (22, 24, 26) of said movable coils (2) respectively actuating the grouped control rods are respectively supplied with the DC current from first, second, and third of said second power units (46, 90, 92) which respectively receive different second reference current signals from said reference current source (62) while first, second, and third groups (12, 14, 16) of said stationary coils (1) respectively actuating the grouped control rods are respectively supplied with the DC current from first, second, and third of said power units (50, 52, 54) which respectively receive different third reference current signals from said reference current source.

4. A control system for nuclear reactor control rods as claimed in claim 1, 2 or 3 characterised in that said power units comprise thyristor type converters.

5. A control system for nuclear reactor control rods as claimed in claim 4 characterised in that said transfer switch circuit (66) comprises a circuit controlled by an external bank selection circuit.

**Patentansprüche**

1. Steuerungssystem für die Steuerstäbe eines Kernreaktors, die in einer Vielzahl von Gruppe angeordnet und von entsprechenden Steuerstab-Antriebsmechanismen in Heberbauart angetrieben sind, die jeweils eine Hebespule (1), eine bewegliche Greiferspule (2) und eine stationäre Greiferspule (3) aufweisen, um den Steuerstab herauszuziehen und hineinzuschieben, umfassend:

eine erste Treibereinheit (42), um ein Gleichstrom-Ausgangssignal zu liefern;

eine Umschalteinrichtung (66), um das Gleichstrom-Ausgangssignal der ersten Treibereinheit (42) selektiv der einen Gruppe (32, 34, 36) der Hebespulen (1) in vorgegebener Reihenfolge zuzuführen;

zweite Versorgungseinrichtungen (46), um den jeweiligen der beweglichen Greiferspulen (2) von jeder der Gruppen (22, 24, 26) Gleichstrom zuzuführen;

dritte Treibereinheiten (50, 52, 54), wobei jede dritte Treibereinheit mit einer entsprechenden der stationären Greiferspulen (3) von jeder der Gruppen (12, 14, 16) verbunden ist, um den stationären Greiferspulen einen Gleichstrom zu liefern; und

eine Referenzstromquelle (62), um der ersten Treibereinheit (42) ein erstes Referenzstromsignal (64) zu liefern und um zweite bzw. dritte Referenzstromsignale (74; 84, 86, 88) den zweiten Versorgungseinrichtungen (46) bzw. den dritten Treibereinheiten (50, 52, 54) in vorgegebener Folge zuzuführen, so daß die eine Gruppe der Steuerstäße den Rückzugs- oder Einführungsbetrieb durchführt, während die übrigen Gruppen der Steuerstäbe in Bereitschaft sind;

wobei die zweiten Versorgungseinrichtungen bzw. die dritten Treibereinheiten die übrigen Gruppen in Abhängigkeit von den zweiten und dritten Referenzstromsignalen de Referenzstromquelle erregen, so daß die beweglichen Greiferspulen und die stationären Greiferspulen di entsprechenden Steuerstäbe gleichzeitig in dem Bereitschaftszustand halten, dadurch gekennzeichnet, daß die zweiten Versorgungseinrichtungen aus einer Vielzahl von zweiten Treibereinheiten (46, 90, 92) bestehen, von denen jede mit einer entsprechenden Gruppe (22, 24, 26) der zweiten Greiferspulen (2) verbunden ist, und daß die Referenzstromquelle (62) jeder zweiten Treibereinheit ein entsprechendes zweites Referenzstromsignal (74, 94, 96) liefert, wobei die zweiten und dritten Referenzstromsignale einander entsprechen.

2. Steuerungssystem für die Steuerstäbe eines Kernreaktors nach Anspruch 1, dadurch gekennzeichnet, daß sämtliche Treibereinheiten (42; 46, 90, 92; 50, 52, 54) auf der Basis der Referenzstromsignale die Ausgänge einer dreiphasigen Versorgung (40) in Gleichstrom-Ausgangssignale umwandeln.

3. Steuerungssystem für die Steuerstäbe eines Kernreaktors nach Anspruch 1 oder 2, dadurch gekennzeichnet, daß die Steuerstäbe des Kernreaktors in drei Gruppen gruppiert sind, so daß die ersten, zweiten und dritten Gruppen (22, 24, 26) der jeweiligen beweglichen Spulen (2), welche die gruppierten Steuerstäbe betätigen, jeweils mit den Gleichströmen von den ersten, zweiten und dritten der zweiten Treibereinheiten (46, 90, 92) versorgt werden, die jeweils verschiedene zweite Referenzstromsignale von der Referenzstromquelle (62) erhalten, während erste, zweite und dritte Gruppen (12, 14, 16) der jeweiligen stationären Spulen (1), welche die gruppierten Steuerstäbe betätigen, jeweils mit Gleichströmen von den ersten, zweiten und dritten der dritten Treibereinheiten (50, 52, 54) versorgt werden, die jeweils verschliedene dritte Referenzstromsignale von der Referenzstromquelle erhalten.

4. Steuerungssystem für die Steuerstäbe eines Kernreaktors nach Anspruch 1, 2 oder 3, dadurch gekennzeichnet, daß die Treibereinheiten Wandler in Thyristorbauart aufweisen.

5. Steuerungssystem für die Steuerstäbe eines Kernreaktors nach Anspruch 4, dadurch gekennzeichnet, daß die Umschalteinrichtung (66) eine Schaltung aufweist, die von einer externen Bankwählschaltung gesteuert ist.

## Revendications

1. Dispositif de contrôle pour les barres de commande d'un réacteur nucléaire qui sont agencées en un certain nombre de groupes et entraînées par des mécanismes correspondants d'entraînement de barres de commande du type à vérin, chacun ayant une bobine élévatrice (1), une bobine mobile de serrage (2) et une bobine stationnaire de serrage (3) pour retirer et insérer la barre de commande, comprenant:

une première unité de puissance (42) pour produire une sortie en courant continue;

un circuit commutateur de transfert (66) pour appliquer sélectivement la sortie en courant continu de ladite première unité de puissance (42) à un groupe (32, 34, 36) des bobines élévatrices (1) en une séquence prédéterminée;

un second moyen de fourniture de puissance (46) pour fournir un courant continue à certaines respectives desdites bobines mobiles de serrage (2) de chacun des groupes (22, 24, 26);

des troisièmes unités de puissance (50, 52, 54), chaque troisième unité de puissance étant connéctée à une bobine respective stationnaire de serrage (3) de chacun des groupes (12, 14, 16) pour appliquer un courant continue auxdites bobines stationnaires de serrage; et

une source de courant de référence (62) pour appliquer un premier signal au courant de référence (64) à ladite première unité de puissance (42) et pour appliquer respectivement des second et troisième signaux au courant de référence (74; 84, 86, 88) audit second moyen de fourniture de pusiance (46) et auxdites troisièmes unités de pusiance (50, 52, 54) respectivement, en séquence prédéterminée de manière qu'un groupe des barres de commande accomplisse l'opération de retrait ou d'insertion tandis que les groupes restants des barres de commande sont à l'arrêt;

ledit second moyen de fourniture de puissance et lesdites troisèmes unités de puissance excitant respectivement lesdites groupes restants en réponse auxdits second et troisième signaux au courant de référence de ladite source de courant de référence de manière que lesdites bobines mobiles de serrage et lesdites bobines stationnaires de serrage retiennent simultanément les barres correspondantes de commande à l'état d'arrêt; caractérisé en ce que le second moyen de fourniture de puissance se compose d'un certain nombre de secondes unités de pusiance (46, 90, 92), chacune étant connectée à un groupe respectif (22, 24, 26) des secondes bobines de serrage (2) et en ce que la source de courant de référence (62) fournit, à chaque seconde unité de puissance, un second signal respectif au courant de référence (74, 94, 96), les second et troisième signaux au courant de référence correspondant l'un à l'autre.

2. Dispositif de contrôle pour les barres de commande d'un réacteur nucléaire selon la revendication 1, caractérisé en ce que toutes lesdites unités de puissance (42; 46, 90, 92; 50, 52, 54) convertissent un source de courant triphasé (40) en la sortie en courant continue sur la base desdits signaux au courant de référence.

3. Dispositif de contrôle pour les barres de commande d'un réacteur nucléaire selon la revendication 1 ou 2, caractérisé en ce que lesdites barres de commande du réacteur nucléaire sont groupées en trois de manière que des premier, second et troisième groupes (22, 24, 26) desdites bobines mobiles (2) actionnant respectivement les barres groupées de commande soient respectivement alimentés en courant continu des première, seconde et troisième desdites secondes unités de puissance (46, 90, 92) qui reçoivent respectivement différents seconds signaux au courant de référence de ladite source de courant de référence (62) tandis que les premier, second et troisième groupes (12, 14, 16) desdites bobines stationnaires (1) actionnant respectivement les barres groupées de commande reçoivent respectivement le courant continu des première, seconde et troisième desdites troisième unités de puissance (50, 52, 54) qui, respectivement, reçoivent des troisièmes signaux différents au courant de référence de ladite source de courant de référence.

4. Dispositif de contrôle pour les barres de commande d'un réacteur nucléaire selon la revendication 1, 2 ou 3, caractérisé en ce que lesdites unités de puissance comprennent des convertisseurs du type à thyristor.

5. Dispositif de contrôle pour les barres de commande d'un réacteur nucléaire selon la revendication 4, caractérisé en ce que ledit circuit commutateur de transfer (66) comprend un circuit commandé par un circuit sélecteur externe.

0 162 163

FIG. 1

FIG. 2A

FIG. 2B

1

# FIG. 3

PRIOR ART

THREE-PHASE POWER SOURCE ~40

REFERENCE CURRENT SOURCE 62

THIRD POWER UNIT 56 58 60

THIRD POWER UNIT

THIRD POWER UNIT ~54

SECOND POWER UNIT 46

FIRST POWER UNIT 42

50 52 16

76

66

68 70 72

78 80 82

FIRST GROUP 12

SECOND GROUP 14

THIRD GROUP 16

FIRST GROUP 22

SECOND GROUP 24

THIRD GROUP 26

FIRST GROUP 32

SECOND GROUP 34

THIRD GROUP 36

10 FIRST SET LOADS (SG COILS)

20 SECOND SET LOADS (MG COILS)

30 THIRD SET LOADS (LIFT COILS)

0 162 163

# FIG. 4

THREE-PHASE POWER SOURCE — 40

REFERENCE CURRENT SOURCE

THIRD POWER UNIT

THIRD POWER UNIT

THIRD POWER UNIT

SECOND POWER UNIT

SECOND POWER UNIT

SECOND POWER UNIT — 92

FIRST POWER UNIT — 42

FIRST GROUP

SECOND GROUP

THIRD GROUP

FIRST GROUP

SECOND GROUP

THIRD GROUP

FIRST GROUP

SECOND GROUP

THIRD GROUP

10 FIRST SET LOADS (SG COILS)

20 SECOND SET LOADS (MG COILS)

30 THIRD SET LOADS (LIFT COILS)

0 162 163